# EUROPEAN PATENT APPLICATION

(11) **EP 3 738 890 A1**
(43) Date of publication of application: **18.11.2020**
(21) Application number: 19174051.3
(22) Date of filing: 13.05.2019
(51) Int. Cl.: B64F 1/32, B60P 1/38

(54) **LOADING DEVICE AND METHODS FOR LOADING AND UNLOADING AN AIRCRAFT**

(71) Applicant: Couchman, Johnny, Carlow (IE)
(72) Inventor: Couchman, Johnny, Carlow (IE)
(74) Representative: Bittner, Thomas L.

(57) **Abstract**

The disclosure refers to a loading device for loading and/or unloading an aircraft. The loading device comprises a base structure (1) with a longitudinal base axis, a first receiving unit (7) for receiving at least one object to be loaded and/or unloaded, and a second receiving unit (8) for receiving at least one further object to be loaded and/or unloaded. The first receiving unit (7) comprises a first transport device (11) configured for moving the at least one object into and/or out of the first receiving unit (7) along a first direction of movement essentially parallel to the longitudinal base axis. The second receiving unit (8) comprises a second transport device (11) configured for moving the at least one further object into and/or out of the second receiving unit (8) along a second direction of movement essentially parallel to the longitudinal base axis. The first receiving unit (7) and the second receiving unit (8) are movable around an axis of rotation essentially parallel to the longitudinal base axis along a receiving unit movement path. A first loading position and a second loading position are defined on the receiving unit movement path. The first loading position is above the second loading position and the first receiving unit (7) and the second receiving unit (8) are configured for loading and/or unloading the at least one object, respectively the at least one further object, in the first loading position and in the second loading position. Further, methods for loading an aircraft, for unloading an aircraft and for parallel loading and unloading of an aircraft are provided.

## Description

The present invention refers to a loading device for loading and/or unloading an aircraft, a method for loading an aircraft and a method for unloading an aircraft.

### Background

At present, the standard method for loading and unloading aircraft cargo, in particular aircraft boxes or pallets, onto and out of an aircraft is to provide a scissor lift that can lift these boxes up to the level of the aircraft loading doors. To load the aircraft, pieces of cargo are loaded onto a transport vehicle, for example small dollies or trailers that are towed, usually in groups, out to the aircraft by a small tractor. Here, groups of pieces of cargo are loaded onto the lowered scissor lift, the scissor lift is raised, and the pieces of cargo are loaded onto the aircraft. To unload the aircraft, the same procedure takes place in reverse. This is a time-consuming and labour intensive system.

A rack for loading and accumulating bags is known from the document US 8,596,947 B1. The rack comprises a frame, a plurality of similarly sized shelves maintained in a horizontal position, said frame carrying similar shelves on an opposite side, tracks and a powered mechanism to rotate the shelves. After a first shelf positioned on a bottom portion of the first long side is loaded, it can be moved upwardly, generally concurrently rotating all of the shelves around the rack. All of the shelves can be thereby loaded from the portion position on a first long side. A shelf unloading mechanism may be provided to push the shelf and/or bags loaded thereon off the rack so that all of the shelves can be discharged therewith, by rotatably moving all of the shelves after each shelf has been unloaded. The rack is configured for loading and unloading via the long sides of the rack.

The document JP S 5 539 851A discloses an air cargo loading apparatus. The loading device is self-propelled. Air cargo gondolas are loaded and unloaded at the rear side of the apparatus and moved by a gondola transfer chain circumferentially along a gondola holding structure extending to the rear of the apparatus' driver's seat.

### Summary

It is an objective of the invention to provide improved technologies for loading and unloading aircraft, in particular decreasing the time and manual labour needed for loading and unloading the aircraft.

To solve the objective, a loading device for loading and/or unloading an aircraft according to the independent claim 1 as well as methods for loading an aircraft, for unloading an aircraft and for parallel loading and unloading of an aircraft according to the independent claims 11. 12 and 13, respectively, are provided.

According to an aspect, a loading device for loading and/or unloading an aircraft is provided. The loading device comprises a base structure with a longitudinal base axis, a first receiving unit for receiving at least one object to be loaded and/or unloaded, and a second receiving unit for receiving at least one further object to be loaded and/or unloaded. The first receiving unit comprises a first transport device configured for moving the at least one object into and/or out of the first receiving unit along a first direction of movement essentially parallel to the longitudinal base axis. The second receiving unit comprises a second transport device configured for moving the at least one further object into and/or out of the second receiving unit along a second direction of movement essentially parallel to the longitudinal base axis. The first receiving unit and the second receiving unit are movable around an axis of rotation essentially parallel to the longitudinal base axis along a receiving unit movement path. A first loading position and a second loading position are defined on the receiving unit movement path. The first loading position is above the second loading position and the first receiving unit and the second receiving unit are configured for loading and/or unloading the at least one object, respectively the at least one further object, in the first loading position and in the second loading position.

According to another aspect, a method for loading an aircraft is provided. The method comprises the steps of providing an aircraft, providing the loading device with the first receiving unit in the second loading position, receiving, in the first receiving unit, at least one object by operating the first transport device for moving the at least one object into the first receiving unit, moving the first receiving unit around the axis of rotation out of the second loading position, moving the second receiving unit around the axis of rotation into the second loading position, receiving, in the second receiving unit, at least one further object by operating the second transport device for moving the at least one further object into the second receiving unit, moving the first receiving unit around the axis of rotation into the first loading position, loading the at least one object from the first receiving unit onto the aircraft by operating the first transport device for moving the at least one object from the first receiving unit into the aircraft, moving the first receiving unit around the axis of rotation out of the first loading position, moving the second receiving unit around the axis of rotation into the first loading position, and loading the at least one further object from the second receiving unit onto the aircraft by operating the second transport device for moving the at least one further object from the second receiving unit into the aircraft.

According to a further aspect, a method for unloading an aircraft is provided. The method comprises the steps of providing an aircraft, providing the loading device with the first receiving unit in the first loading position, receiving, in the first receiving unit, at least one object by operating the first transport device for moving the at least one object from the aircraft into the first receiving unit, moving the first receiving unit around the axis of rotation out of the first loading position, moving the second receiving unit around the axis of rotation into the first loading position, receiving, in the second receiving unit, at least one further object by operating the second transport device for moving the at least one further object from the aircraft into the second receiving unit, moving the first receiving unit around the axis of rotation into the second loading position, unloading the at least one object from the first receiving unit by operating the first transport device for moving the at least one object out of the first receiving unit, moving the first receiving unit around the axis of rotation out of the second loading position, moving the second receiving unit around the axis of rotation into the second loading position, and unloading the at least one further object from the second receiving unit by operating the second transport device for moving the at least one further object out of the second receiving unit.

According to another aspect, a method for parallel unloading and loading of an aircraft is provided. The method comprises the steps of providing an aircraft, providing the loading device with the first receiving unit in the first loading position and the second receiving unit in the second loading position, receiving, in the first receiving unit, at least one object by operating the first transport device for moving the at least one object from the aircraft into the first receiving unit, receiving, in the second receiving unit, at least one further object by operating the second transport device for moving the at least one further object into the second receiving unit, moving the first receiving unit around the axis of rotation from the first loading position into the second loading position, moving the second receiving unit around the axis of rotation from the second loading position into the first loading position, unloading the at least one object from the first receiving unit by operating the first transport device for moving the at least one object out of the first receiving unit, loading the at least one further object from the second receiving unit onto the aircraft by operating the second transport device for moving the at least one further object from the second receiving unit into the aircraft.

The aircraft may be an aeroplane. Alternatively or additionally, the loading device may be used for loading and/or unloading other types of aircraft, such as a helicopter or a lighter-than-air-aircraft. According to the present disclosure, movement of the first and second receiving unit around an axis of rotation may be a rotation, i.e. a movement around the axis of rotation on a circular unit movement path, or a different type of movement around the axis of rotation, for example a movement on a rectangular unit movement path or a movement on a unit movement path of any desired shape.

The first transport device and the second transport device may respectively be configured for moving the at least one object, respectively the at least one further object, into and/or out of the respective receiving unit via a frontal side of the respective receiving unit, the frontal side being defined on a plane essentially perpendicular to the longitudinal base axis. The first transport device and the second transport device may respectively be configured for moving the at least one object, respectively the at least one further object into and/or out of the respective receiving via both of two frontal sides on opposing ends of the respective receiving unit.

The movement of the first receiving unit and the movement of the second receiving unit may be coupled such that the first receiving unit is in the first position when the second receiving unit is in the second position and the first receiving unit is in the second position when the second receiving unit is in the first position.

The first loading position may be vertically directly above the second loading position. The first loading position may be at a height of an aircraft loading door of an aircraft which is to be loaded or unloaded. Thereby, a direct transfer of an object between a receiving unit in the first position and the aircraft to be loaded or unloaded may be facilitated. Additionally or alternatively, the second loading position may be at a height of a baggage handling system, such as a conveyor belt system in a baggage hangar, or of a baggage transport vehicle. Thereby, a direct transfer of an object between a receiving unit in the second position and the baggage handling system or the baggage transport vehicle may be facilitated.

The loading device may comprise a loading frame rotatably mounted to the base structure such that the loading frame is rotatable relative to the base structure around a frame rotation axis essentially parallel to the longitudinal axis. The first receiving unit and the second receiving unit may be mounted to and movable with the loading frame. For example, the loading frame may comprise end frames between which the loading frame extends. In this or other embodiments, the first and/or the second receiving unit may comprise a barrel structure, i.e. an elongated structure, for example with an essentially circular or rectangular cross-section. The barrel structure may comprise a circumferential surface that is closed or at least partially open. In embodiments comprising a loading frame, the barrel structure may be mounted to the loading frame, for example at least at opposing frontal sides of the loading frame being defined on a plane essentially perpendicular to the longitudinal base axis.

The first receiving unit and the second receiving unit may be self-levelling, such that a respective first bottom section and second bottom section of the first and second receiving units is facing down in any position of the first, respectively second, receiving unit along the receiving unit movement path. The first receiving unit and the second receiving unit may be self-levelling due to gravitational forces. For example, a respective barrel structure of the first and second receiving units may comprise rollers at opposing frontal ends of the barrel structure that run inside end frames on opposing frontal ends of the loading frame, for example on the frame beams and/or on rails. Frame beams may comprise rails. The respective barrel structure may have a centre of gravity that causes the barrel structure to turn on the rollers, levelling the barrel structure such that the bottom section is facing down in any position of the respective receiving unit along the receiving unit movement path. For example, the centre of gravity may be in or close to the respective receiving unit's bottom section. In alternative embodiments, the receiving units may be suspended off a single point or single axis and be self-levelling under the influence of gravitational forces due to hanging down from the single point or single axis. In such embodiment, the receiving units may respectively be referred to as a cradle.

As an alternative, the first and second receiving units may each be actively levelled. For example, each receiving unit may comprise a respective orientation sensor, configured to provide orientation signals indicative of a current orientation of the respective receiving unit, and a respective levelling actuator may act on each receiving units based on the orientation signals to move the respective receiving unit such that the respective bottom section is facing down in any position of the respective receiving unit along the receiving unit movement path. The loading device may comprise at least one actuator for moving the first receiving unit and the second receiving unit along the receiving unit movement path. For example, the loading device my comprise an actuator acting on the loading frame to rotate the loading frame around the frame rotation axis and thereby moving the first and second receiving units along the receiving unit movement path. Alternatively, an actuator may act on a receiving unit movement system, such as a pulley system and/or transfer chain system, for moving the receiving units along the receiving unit movement path. As a further alternative, the loading device may comprise a respective actuator acting on each receiving unit for moving the respective receiving unit along the receiving unit movement path. For example, movement of the receiving units may be effected by an endless chain going round the periphery of the receiving unit movement path, by a series of rams working on a ratchet and intermediate locking basis, or by a toothed gear running around the periphery driven by an hydraulic motor.

The first transport device and/or the second transport device may comprise a conveyor device at the bottom of the first, respectively second, receiving unit. For example, a respective conveyor device may comprise a conveyor belt at the bottom of the respective receiving unit on which the at least one object, respectively the at least one further object, is movable. Alternatively or additionally, the respective conveyor device may comprise a set of driven wheels at the bottom of the respective receiving unit for moving the at least one object, respectively the at least one further object. The respective conveyor device may be configured for moving the at least one object, respectively the at least one further object, in opposing directions along the first, respectively second, direction of movement, allowing loading and/or unloading of objects into and/or out of the respective receiving unit via both of opposing frontal sides of the respective receiving unit.

The loading device may comprise a mobility device. For example, the mobility device may comprise a plurality of wheels for moving the loading device, freely and/or on tracks. Thereby, free positioning of the loading device with respect to an aircraft and/or a baggage handling system may be enabled.

The mobility device may comprise a motor device. The motor device may comprise any type of suitable motor as known in the art, such as a combustion engine or an electromotor. The motor device may drive at least one wheel of the mobility device. Thereby, a self-propelled loading device may be provided. The loading device may further comprise a conductor stand for allowing an operator to drive the loading device.

Alternatively or additionally, the loading device may be pulled by a tractor device. The loading device may be provided as a dolly or trailer.

The loading device may comprise a height adjustment device for raising and/or lowering the first and/or the second loading position. For example, the height adjustment device may comprise hydraulically driven legs that are lowered to the ground and driven to raise and/or lower the entire loading device with respect to the ground. Alternatively, the height adjustment device may comprise hydraulic legs acting on the wheels of the loading device for raising and/or lowering the first and/or second loading position, for example by raising and/or lowering the loading frame, and thereby the receiving units, with respect to the base structure. As a further alternative or additionally, the height adjustment device may be configured for raising and/or lowering each respective receiving unit with respect to the base structure.

Alternatively or additionally, the height of the first and/or the second loading position may be adapted by designating a respective different point on the receiving unit movement path to define the respective loading position. Thereby, for example, the height of the first loading position may be adjusted to the height of an aircraft, that is the height of the point of where the aircraft is to be loaded and/or unloaded, by defining the first loading position to be on a point of the receiving unit movement path at which the height of a receiving unit positioned at that point and the height of the aircraft match, In a similar example, in addition or as an alternative, the height of the second loading position may be adjusted to the height of a baggage handling system, that is the height of the point of where the objects are to be moved into or out of the baggage handling system, by defining the second position loading to be on a point of the receiving unit movement path at which the height of a receiving unit positioned at that point and the height of the baggage handling system match,

The loading device may comprise a third receiving unit. The loading device may comprise any desired number of additional receiving units. The number of receiving units may be adapted to desired overall dimensions of the loading device and/or space restrictions at envisioned locations of employment of the loading device, such as at an aircraft and/or in or at a baggage handling hangar. Each of the embodiments described above with regard to the first and/or the second receiving unit may apply to the third and/or any additional receiving unit accordingly. In particular, the third and/or any additional receiving unit may be mounted to the loading frame. For an even number of receiving units, the loading device may configured such that there is a respective receiving unit at the first loading position and the second loading position at the same time. For an uneven number of receiving units, the loading device may be configured such that there is no receiving unit in the second loading position when there is a receiving unit in the first loading position and that there is no receiving unit in the first loading position when there is a receiving unit in the second loading position.

With regard to the method for loading an aircraft, the method for unloading an aircraft and/or the method for parallel loading and unloading of an aircraft, the embodiments described above with regard to the loading device may apply mutatis mutandis.

In the methods loading and/or unloading an aircraft, steps may be performed sequentially or in parallel. In particular, movement of different receiving units may be simultaneous, for example in embodiments of the loading device in which the receiving units are mounted to a loading frame. Further, loading and/or unloading of objects onto and/or out of the receiving units may be performed simultaneously.

### Description of further embodiments

Following, embodiments, by way of example, are described with reference to figures. In the figures show:
- Fig. 1: a schematic view of a loading device for loading and/or unloading an aircraft;
- Fig. 2: the loading device of Fig. 1 from a different perspective;
- Fig. 3: the loading device in a state of operation;
- Fig. 4: the loading device in a different state of operation;
- Fig. 5: a loading device for loading and/or unloading an aircraft positioned at a baggage handling hangar; and
- Fig. 6: a loading device for loading and/or unloading an aircraft positioned at an aircraft.

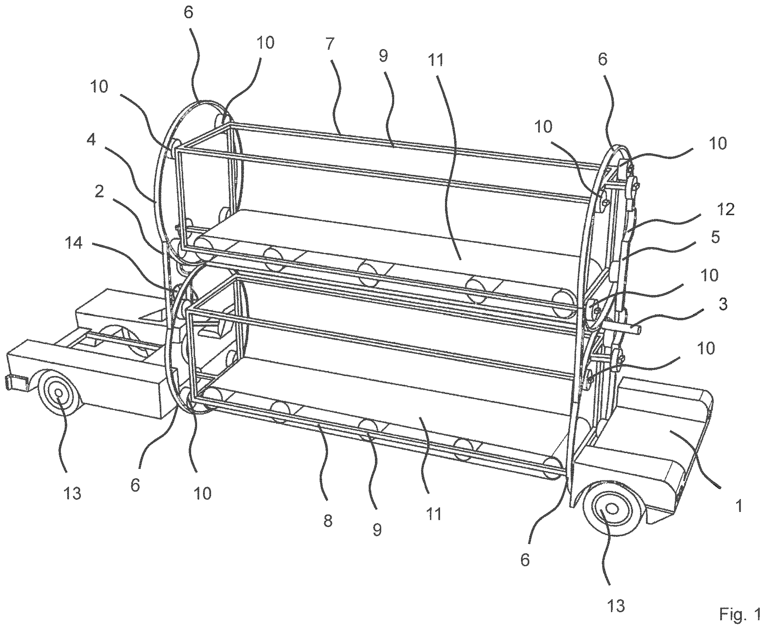

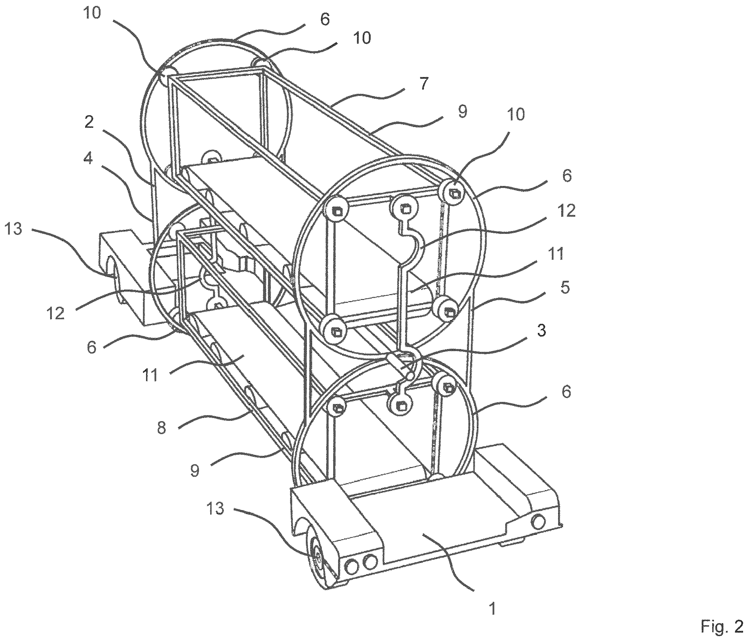

Figures 1 and 2 show schematic views from different perspectives of a loading device for loading and/or unloading an aircraft such as an aeroplane. On a base structure 1 of the loading device, a loading frame 2 is rotatably mounted on pins 3. The pins 3 are positioned on a frame rotation axis of the loading frame 2 around which the loading frame 2 may rotate. Herein, the frame rotation axis is parallel to a longitudinal axis of the base structure 2 or longitudinal base axis. The details of the mounting of the loading frame 2 to the base structure are not shown in Fig. 1. The detailed nature of such mounting is not essential to the disclosure and may be any suitable mounting as known in the art, such as, for example, a support frame comprising bearings into which the pins 3 are mounted.

At opposing front ends 4, 5 of the loading frame 2, the loading frame 2 comprises two respective circular frame structures 6. Between two directly opposing circular frame structures 6 at different ends 4, 5 of the loading frame 2, a first receiving unit 7 and a second receiving unit 8 are mounted. Each of the receiving units 7, 8 comprises a rectangular frame 9 forming a barrel structure extending between the opposing front ends 4, 5 of the loading frame 2. Each rectangular frame 9 is provided with rollers 10 at the opposing front ends. For mounting the rectangular frames 9 in the loading frame 2, the rollers 10 are positioned to run on the inside of the respective directly opposing circular frame structures 6 of the loading frame 2. The circular frame structures 6 may provide a rail structure on which the rollers 10 run and the rollers 10 may be formed to run in a rail-like manner on the respective circular frame structure 6. To this end, the rollers 10 may be formed in such embodiments in such a manner that they engage with the rails provided by the circular frame structures 6 as is known from common rail systems such as trains or tramways. The mounting of the receiving units 7, 8 via the rollers 10 allows for a rotation of the receiving units 7, 8 relative to the loading frame 2 around a respective longitudinal unit axis of rotation parallel to the longitudinal base axis.

Each of the receiving units 7, 8 is provided with a transport device 11 comprising a conveyor belt at the bottom of the respective receiving unit 7, 8. The conveyor belts are configured to be able to move in opposing directions. Therefore, the transport devices 11 allow for moving objects, such as luggage containers, into and out of the respective receiving unit 7, 8 through the unit's respective frontal end faces at the opposing front ends 4, 5. Thus, luggage or other objects may be loaded onto or unloaded from the loading device.

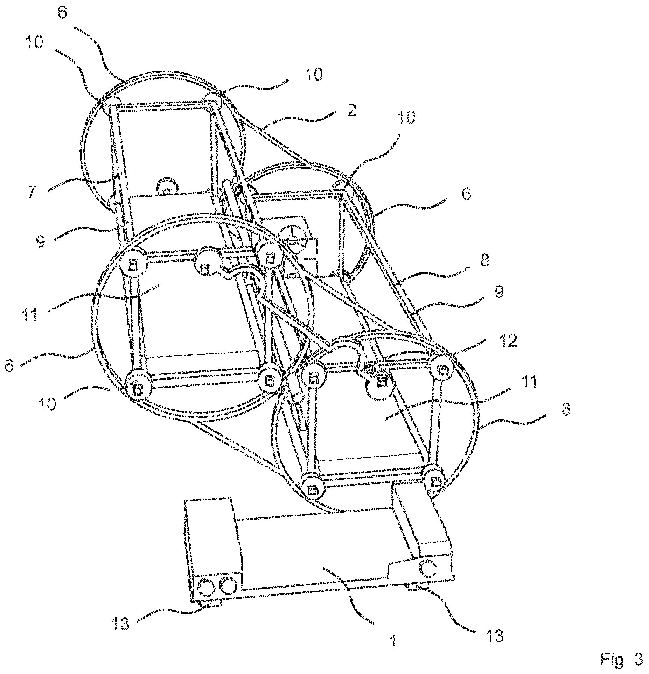

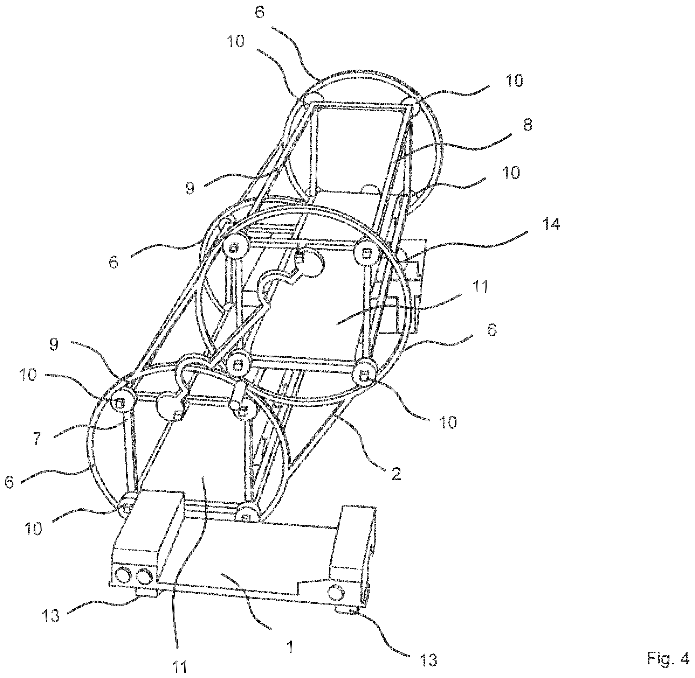

The loading frame 2 may be rotated by a motor (not shown) around the pins 3 and thus around the frame rotation axis. Thereby, the receiving units 7, 8 are rotated with the loading frame 2 around an axis of rotation incident with the frame rotation axis and thereby parallel to the longitudinal base axis, defining a circular receiving unit movement path. In Figures 1 and 2, the first receiving unit 7 is shown in a first loading position at the top of the loading device and the second receiving unit 8 is shown in a second loading position at the bottom of the loading device. In the embodiment shown, the first receiving unit 7 is in the first loading position when the second receiving unit 8 is in the second loading position and vice versa. Figures 3 and 4 show a rotation of the loading frame 2 to rotate the first receiving unit 7 from the first loading position to the second loading position and, at the same time, the second receiving unit 8 from the second loading position to the first loading position.

In the position shown in Fig. 3, the loading frame is rotated in an anti-clockwise direction - in the drawing plane - in comparison to the position shown in Fig 2. Thereby, the first receiving unit 7 is rotated to the left and downward out of the first loading position. At the same time, the second receiving unit 8 is rotated to the right and upward out of the second loading position.

In Fig. 4, the loading frame 2 has been further rotated in the anti-clockwise direction, thereby rotating the first receiving unit 7 closer to the second loading position and the second receiving unit 8 closer to the first loading position. By completing a rotation of the loading frame 2 by 180 degrees, the first receiving unit 7 is moved into the second loading position and the second receiving unit 8 is moved into the first loading position. Following, the position of the receiving units 7, 8 may again be reversed either by completing a full rotation of the loading frame by 360 degrees in the anti-clockwise direction or by reversing the direction of rotation and performing a rotation of the loading frame 2 by 180 degrees in the opposite, clockwise, direction.

As shown for example in Figures 3 and 4, the receiving units 7, 8 are self-levelling, that is, during rotation of the loading frame 2 and movement of the receiving units 7, 8 along the receiving unit movement path, the receiving units 7, 8 rotate on the rollers 10 in the respective circular frame structures 6 such that the transport devices 11 are always facing down. In this sense, the transport devices 11 facing down is understood to mean that the respective (bottom) side of the receiving units 7, 8 with the conveyor belt is the lowest side of the respective receiving unit 7, 8. The necessary rotation of the receiving units 7, 8 for self-levelling is automatically achieved under the effect of gravity, as the placement of the transport devices 11, that is the configuration of the conveyor belts at the bottom of the respective receiving unit 7, 8, leads to the centre of gravity of the respective receiving unit 7, 8 being shifted from the geometrical centre towards the bottom.

In the embodiment shown, the receiving units 7, 8 are additionally connected by two rods 12, coupling the rotation of the receiving units 7, 8 in the circular frame structures 6. As may be seen in the Figures 1 to 4, the rods 12 are positioned such that the opening on one frontal end of the receiving unit in the first loading position as well as the opening on the opposing frontal end of the receiving unit in the second loading position are not blocked by any rod 12. Thus, loading and unloading the loading unit is enabled for the first loading position on one frontal side and for the second loading position on the opposing frontal side. Any or all of the rods 12 may be omitted in different embodiments of the loading device.

In alternative embodiments, in particular in embodiments comprising more than two receiving units, rods may be connected to all the loading platforms individually, ensuring they do not interfere with the bearings of individual sections of the loading device. For example, the rods may be inside bearing frames, in particular circular frame structures 6. The whole rotating part may be driven by motors behind the bearings to clear for further components, such as hydraulic pipes. In general, in embodiments of the loading device,, any system rotating the structure may be at least doubled to increase safety. Such design may be desirable in case a plurality of loading platforms lead to considerable stress on the structure in a use scenario in which one side of the loading device is loaded and the other side is unloaded. In such case, a broad chassis may also be provided to compensate.

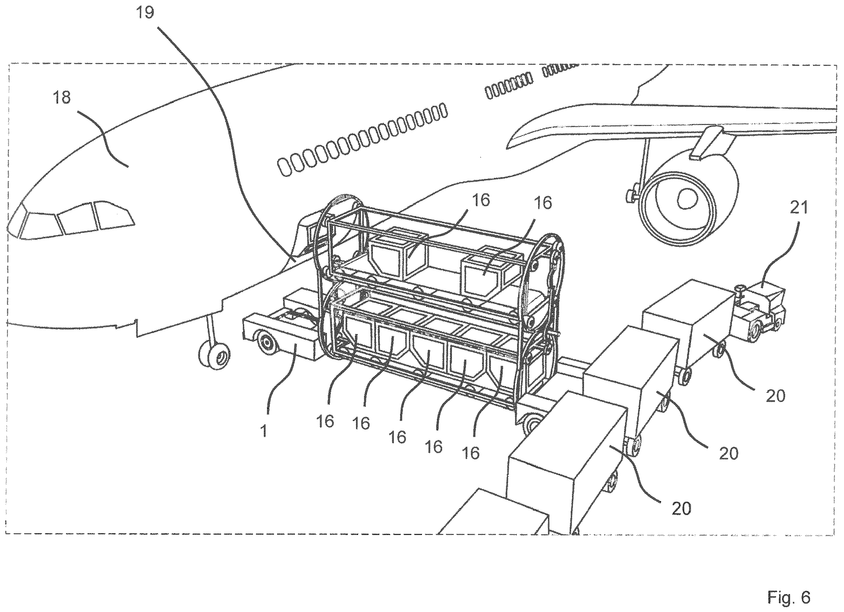

In the embodiment shown, the loading device is self-propelled. To this end, the base structure 1 is provided with wheels 13 and a motor as well as a conductor stand 14 provided with a steering wheel. Thereby, the loading device is provided as a vehicle that is driveable by an operator. Sections of the loading device, including the conductor stand 14, in front of and behind the loading frame 2 are provided in a low-profile configuration such that such sections fit under the fuselage of an aircraft to be loaded and/or unloaded (for example shown in Fig. 6). Depending on the usage scenario of the loading device, the wheels 13 may be configured to run on tracks.

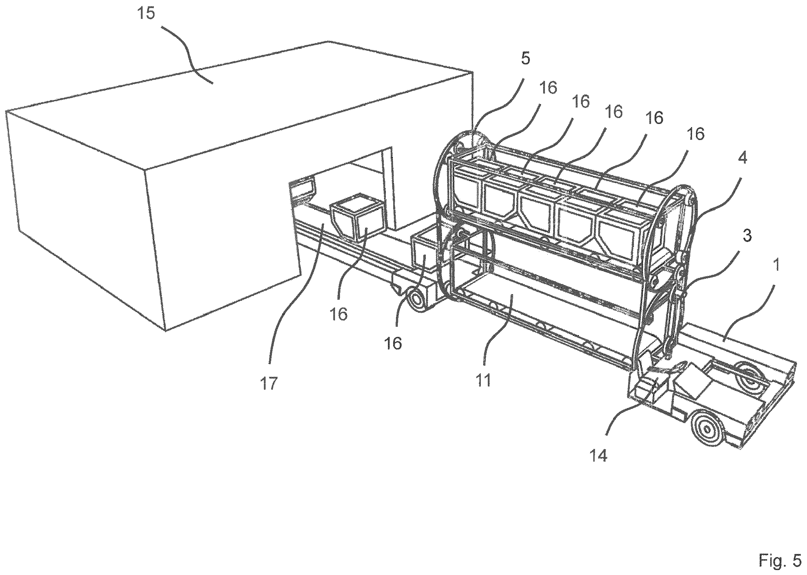

With regard to Figures 5 and 6, methods for loading and/or unloading aircraft are described.

Fig. 5 shows a loading device according to the disclosure positioned at a baggage handling hangar 15. In the hangar 15, luggage boxes 16 are transported on a conveyor belt system 17. For loading luggage boxes, the loading device is positioned at an exit point of the conveyor belt system 17 with the first receiving unit 7 in the second loading position. Luggage boxes 16 are then transported on the conveyor belt system 17 of the hangar 15 to the loading device and from there, by the conveyor belt of the transport device 11 of the first receiving unit 7 into the first receiving unit 7. To this end, the height of the second loading position and the height of the conveyor belt system 17 at the exit point are adapted to each other, allowing a direct transfer of the luggage boxes 16. The loading frame 2 of the loading device is then rotated such that the first receiving unit 7 is moved into the first loading position and the second receiving unit 8 is moved into the second loading position. This state is shown in Fig. 5. The second receiving unit 8 may then be loaded with luggage boxes 16 from the conveyor belt system 17 using the conveyor belt of the transport device 11 of the second receiving unit 8. The fully loaded loading device may then be driven to an aircraft to be loaded with the luggage boxes 16.

Unloading objects from the loading device onto the conveyor belt system 16 may take place in a reversed sequence, that is unloading the objects from one receiving unit onto the conveyor belt system 16 using the conveyor belt of the receiving unit's transport device 11, rotating the loading frame 2, and unloading the objects from the other receiving unit onto the conveyor belt system 16 using the conveyor belt of that receiving unit's transport device 11.

In Fig. 6, a loading device according to the disclosure is shown positioned at an aircraft 18. To load luggage boxes 16 onto the aircraft 18, the luggage boxes 16 are transported by the conveyor belt of the transport device 11 of a receiving unit positioned at a cargo door 19 of the aircraft 18 in the first loading position from the receiving unit into the cargo door 19. To this end, the height of the first loading position and the height of the cargo door 19 of the aircraft 18 are adapted to each other, allowing a direct transfer of the luggage boxes 16. To unload objects such as the aircraft boxes 16 from the aircraft 18 onto the loading device, the objects are transported by the conveyor belt of the transport device 11 of the respective receiving unit positioned at the cargo door 19 from the cargo door 19 into the receiving unit.

Further, according to the arrangement of Fig 6, one dolly 20 of a plurality of dollies 20 towed by a tractor 21 is positioned at the loading device such that a transfer of luggage boxes 16 between the dolly 20 and a receiving unit of the loading device in the second loading position is enabled according to the above description with regard to the conveyor belt 16, *mutatis mutandis.* To this end, in addition or as an alternative to being adapted to the height of a conveyor belt system 17, the height of the second loading position may be adapted to a height of the dollies 20.

In further embodiments, the loading device may be configured for adapting the height of the first and/or the second loading position. For example, the entire loading device or parts of the loading device may be raised or lowered, for example using a hydraulic actuator system.

The arrangement of Fig. 6 allows for different methods of loading and/or unloading the aircraft 18. For loading the aircraft 18, the first receiving unit 7 may initially be in the second loading position. Luggage boxes 16 are then transferred from a dolly 20 positioned at the loading device to the first receiving unit 7 using the conveyor belt of the transport device 11 of the first receiving unit 7. The loading frame 2 is then rotated, bringing the first receiving unit 7 into the first loading position and the second receiving unit 8 into the second loading position. The luggage boxes 16 are then unloaded from the first receiving unit 7 into the aircraft 18 via the cargo door 19 using the conveyor belt of the first receiving unit 7. At the same time, further luggage boxes 16 from the same or a different dolly 20 positioned at the loading device are loaded into the second receiving unit 8 using the conveyor belt of the transport device 11 of the second receiving unit 8. The loading frame 2 is then rotated, the luggage boxes 16 are loaded from the second receiving unit 8 onto the aircraft 18 and new luggage boxes 16 are loaded from a dolly 20 into the first receiving unit 7. These steps are repeated until all desired luggage boxes 16 have been loaded into the loading device. Finally, the last luggage boxes 16 are loaded from one of the receiving units into the aircraft 18 without further luggage boxes 16 being loaded into the other receiving unit.

Similarly, for unloading an aircraft, the first receiving unit 7 may initially be in the first loading position. Luggage boxes 16 are then transferred from the aircraft 18 to the first receiving unit 7 using the conveyor belt of the transport device 11 of the first receiving unit 7. The loading frame 2 is then rotated, bringing the first receiving unit 7 into the second loading position and the second receiving unit 8 into the first loading position. The luggage boxes 16 are then unloaded from the first receiving unit 7 onto a dolly 20 positioned at the loading device using the conveyor belt of the first receiving unit 7. At the same time, further luggage boxes 16 from the aircraft 18 are loaded into the second receiving unit 8 using the conveyor belt of the transport device 11 of the second receiving unit 8. The loading frame 2 is then rotated, the luggage boxes 16 are loaded from the second receiving unit 8 onto a dolly 20 and new luggage boxes 16 are loaded from the aircraft 18 into the first receiving unit 7. These steps are repeated until all desired luggage boxes 16 have been unloaded from the aircraft 18. Finally, the last luggage boxes 16 are loaded from one of the receiving units into a dolly 20 without further luggage boxes 16 being unloaded into the other receiving unit.

Further, a method for parallel loading and unloading of the aircraft 18 is provided. For such method, the first receiving unit 7 may initially be in the first loading position and the second receiving unit 8 may be in the second loading position. Luggage boxes 16 are then transferred from the aircraft 18 to the first receiving unit 7 using the conveyor belt of the transport device 11 of the first receiving unit 7. At the same time, luggage boxes 16 are transferred from a dolly 20 positioned at the loading device to the second receiving unit 8 using the conveyor belt of the transport device 11 of the second receiving unit 8. The loading frame 2 is then rotated, bringing the first receiving unit 7 into the second loading position and the second receiving unit 8 into the first loading position. The luggage boxes 16 from the first receiving unit 7 are then loaded onto the dolly 20 and, simultaneously, the luggage boxes 16 from the second receiving unit 8 are loaded onto the aircraft 18. The first receiving unit 7 is then loaded with luggage boxes 16, in particular from a different dolly 20 positioned at the loading device, an the second receiving unit 8 is loaded with luggage boxes 16 from the aircraft 18. The loading frame 2 is rotated and both receiving units are unloaded, onto the dolly 20 and into the aircraft 18, respectively. These steps are repeated until all desired luggage boxes 16 have been unloaded from the aircraft 18 and loaded onto the aircraft 18. It is to be understood that the loading process or the unloading process may be finished before the respective other process if a different number of luggage boxes 16 is to be loaded onto the aircraft 18 than unloaded from the aircraft 18. In this case, one of the receiving units 7, 8 may remain empty or loading, respectively unloading, may take place as described above with respect to Fig. 6, that is with both receiving units being used for loading, respectively unloading, only.

In an alternative method for loading an aircraft, the loading device may first be loaded at a hangar, as described above with regard to Fig. 5, then be driven to an aircraft 18 and be unloaded onto the aircraft 18. Herein, the luggage boxes 16 from one receiving unit in the first loading position are first loaded onto the aircraft 18 as described above, the loading frame 2 is rotated, and the luggage boxes 16 are loaded from the other receiving unit, which is now in the first loading position, onto the aircraft 18. The reverse may be true in a method for unloading an aircraft, with both receiving units 7, 8 being loaded at the aircraft 18, the loading device being driven to the hangar and the receiving units 7, 8 being unloaded, for example onto a conveyor belt system 17.

In further embodiments (not shown), a conveyor belt system 17 may lead up to a loading device positioned at an aircraft 18 and loading and/or unloading may take place as described above with regard to Fig. 6 with the conveyor belt system 17 replacing the dollies 20.

The features disclosed in this specification, the figures and / or the claims may be material for the realization of various embodiments, taken in isolation or in various combinations thereof.

## Claims

1. A loading device for loading and/or unloading an aircraft, comprising
- a base structure (1) with a longitudinal base axis;
- a first receiving unit (7) for receiving at least one object to be loaded and/or unloaded, comprising a first transport device (11) configured for moving the at least one object into and/or out of the first receiving unit (7) along a first direction of movement essentially parallel to the longitudinal base axis; and
- a second receiving unit (8) for receiving at least one further object to be loaded and/or unloaded, comprising a second transport device (11) configured for moving the at least one further object into and/or out of the second receiving unit (8) along a second direction of movement essentially parallel to the longitudinal base axis;
wherein the first receiving unit (7) and the second receiving unit (8) are movable around an axis of rotation essentially parallel to the longitudinal base axis along a receiving unit movement path, a first loading position and a second loading position being defined on the receiving unit movement path, wherein the first loading position is above the second loading position and the first receiving unit (7) and the second receiving unit (8) are configured for loading and/or unloading the at least one object, respectively the at least one further object, in the first loading position and in the second loading position.

2. The loading device according to claim 1, wherein the first loading position is vertically directly above the second loading position.

3. The loading device according to claim 1 or 2, comprising a loading frame (2) rotatably mounted to the base structure (1) such that the loading frame (2) is rotatable relative to the base structure (1) around a frame rotation axis essentially parallel to the longitudinal axis, wherein the first receiving unit (7) and the second receiving unit (8) are mounted to and movable with the loading frame (2).

4. The loading device according to at least one of the preceding claims, wherein the first receiving unit (7) and the second receiving unit (8) are self-levelling, such that a respective first bottom section and second bottom section of the first (7) and second (8) receiving units is facing down in any position of the first (7), respectively second (8), receiving unit along the receiving unit movement path.

5. The loading device according to at least one of the preceding claims, comprising at least one actuator for moving the first receiving unit (7) and the second receiving unit (8) along the receiving unit movement path.

6. The loading device according to at least one of the preceding claims, wherein the first transport device (11) and/or the second transport device (11) comprises a conveyor device at the bottom of the first (7), respectively second (8), receiving unit.

7. The loading device according to a least one of the preceding claims, comprising a mobility device.

8. The loading device according to claim 7, wherein the mobility device comprises a motor device.

9. The loading device according to at least one of the preceding claims, comprising a height adjustment device for raising and/or lowering the first and/or the second loading position.

10. The loading device according to at least one of the preceding claims, comprising a third receiving unit.

11. Method for loading an aircraft, the method comprising the following steps:
- providing an aircraft (18);
- providing the loading device according to at least one of the preceding claims, with the first receiving unit (7) in the second loading position;
- receiving, in the first receiving unit (7), at least one object by operating the first transport device (11) for moving the at least one object into the first receiving unit;
- moving the first receiving unit (7) around the axis of rotation out of the second loading position;
- moving the second receiving unit (8) around the axis of rotation into the second loading position;
- receiving, in the second receiving unit (8), at least one further object by operating the second transport device (11) for moving the at least one further object into the second receiving unit;
- moving the first receiving unit (7) around the axis of rotation into the first loading position;
- loading the at least one object from the first receiving unit (7) onto the aircraft (18) by operating the first transport device (11) for moving the at least one object from the first receiving unit (7) into the aircraft (18);
- moving the first receiving unit (7) around the axis of rotation out of the first loading position;
- moving the second receiving unit (8) around the axis of rotation into the first loading position; and
- loading the at least one further object from the second receiving unit (8) onto the aircraft (18) by operating the second transport device (11) for moving the at least one further object from the second receiving unit (8) into the aircraft (18).

12. Method for unloading an aircraft, the method comprising the following steps
- providing an aircraft (18);
- providing the loading device according to at least one of the claims 1 to 10, with the first receiving unit (7) in the first loading position;
- receiving, in the first receiving unit (7), at least one object by operating the first transport device (11) for moving the at least one object from the aircraft (18) into the first receiving unit (7);
- moving the first receiving unit (7) around the axis of rotation out of the first loading position;
- moving the second receiving unit (8) around the axis of rotation into the first loading position;
- receiving, in the second receiving unit (8), at least one further object by operating the second transport device (11) for moving the at least one further object from the aircraft (18) into the second receiving unit (8);
- moving the first receiving unit (7) around the axis of rotation into the second loading position;
- unloading the at least one object from the first receiving unit (7) by operating the first transport device (11) for moving the at least one object out of the first receiving unit (7);
- moving the first receiving unit (7) around the axis of rotation out of the second loading position;
- moving the second receiving unit (8) around the axis of rotation into the second loading position; and
- unloading the at least one further object from the second receiving unit (8) by operating the second transport device (11) for moving the at least one further object out of the second receiving unit (8).

13. Method for parallel unloading and loading of an aircraft, the method comprising the following steps:
- providing an aircraft (18);
- providing the loading device according to at least one of the claims 1 to 10, with the first receiving unit (7) in the first loading position and the second receiving unit (8) in the second loading position;
- receiving, in the first receiving unit (7), at least one object by operating the first transport device (11) for moving the at least one object from the aircraft (18) into the first receiving unit (7);
- receiving, in the second receiving unit (8), at least one further object by operating the second transport device (11) for moving the at least one further object into the second receiving unit (8);
- moving the first receiving unit (7) around the axis of rotation from the first loading position into the second loading position;
- moving the second receiving unit (8) around the axis of rotation from the second loading position into the first loading position;
- unloading the at least one object from the first receiving unit (7) by operating the first transport device (11) for moving the at least one object out of the first receiving unit;
- loading the at least one further object from the second receiving unit (8) onto the aircraft (18) by operating the second transport device (11) for moving the at least one further object from the second receiving unit (8) into the aircraft (18).
